# EUROPEAN PATENT SPECIFICATION

(11) **EP 3 393 995 B1**
(45) Date of publication and mention of the grant of the patent: **29.05.2024**
(21) Application number: 16826701.1
(22) Date of filing: 21.12.2016
(51) Int. Cl.: C04B 28/02, C04B 28/04, C04B 28/12, C04B 28/14, C04B 38/02

(54) **METHOD FOR POROSIFICATION OF CONSTRUCTION MATERIALS USING SILOXANES AND POROSIFIED BUILDING MATERIALS**
VERFAHREN ZUR POROSIERUNG VON BAUSTOFFEN MIT SILOXANEN UND POROSIERTE BAUSTOFFE
PROCÉDÉ DE POROSIFICATION POUR MATÉRIAUX DE CONSTRUCTION À L'AIDE DE SILOXANES ET MATÉRIAUX DE CONSTRUCTION POROSIFIÉS

(30) Priority: 22.12.2015 DE 102015016733
(43) Date of publication of application: 31.10.2018
(73) Proprietor: Knauf Gips KG, 97346 Iphofen (DE)
(72) Inventor: BAESE, Rauno, 97072 Würzburg (DE)
(74) Representative: dompatent von Kreisler Selting Werner - Partnerschaft von Patent- und Rechtsanwälten mbB
(86) International application number: PCT/EP2016/002147
(87) International publication number: WO 2017/108182

(56) References cited:
- WO-A1-2008/157714
- JP-A- 2001 163 683
- US-A1- 2008 257 218

## Description

The invention concerns the porosification of construction materials using siloxanes and building materials porosified by siloxanes. The invention especially concerns the use of H-siloxane for the porosification of cementitious building materials.

The porosification of cementitious building materials, for example, gypsum or cement based building materials, is known from prior art. On the one hand, the porosification of the building material effects a reduction of the weight of the individual building components. On the other hand, the porosification can also be functionally desirable, if for example the generated porosity enables the use as thermal insulating building components.

The porosification of building materials can be achieved in various ways. One option of porosification is the addition of foaming substances to the building material prepared with water (slurry). Usuallly, a foam is generated firstand then added to the building material prepared with water. Normally a tenside is used as a foam generator or air-entraining agent.

Another option of porosification of building materials is to actively make the building material porous during the production. Active porosification of concrete can for example be achieved by the addition of aluminium powder or paste. Aluminium powder or paste reacts in the alkaline medium with water to aluminium hydroxide while releasing hydrogen. The reaction of the aluminium powder or paste is time delayed and can in some conditions lead to undesirable post-swelling.

US 2008/257218 A1 discloses a method for producing a porous, cementitious building component using siloxanes as surfactants.

To be able to use cementitious building materials in moist environments, without them being damaged or continually moist due to the moisture, it is known to treat the building material with water-repellent substances, frequently siloxanes. The siloxanes can be added to the slurry, which makes the entire building component water-repellent. However, the siloxanes can also be applied as a coating on the finished building component, which means it is only externally water-repellent.

Since the surface, especially of highly porous building components, is very large and a complete coating of the surface with the water-repellent substance is hardly possible, in these cases often the entire component is water-repellent equipped.

To thus maintain a porous, cementitious building component that is water-repellent finished, at least two additives, one foam generating or air-entraining substance and one water-repellent substance is required to produce the component. That is both expensive and also, in regards to fabrication, cumbersome.

The object of the invention is in the simplification of the production method for porosified, cementitious building materials with a water-repellent finish.

The object is achieved by a method according to claim 1 and by a building component according to claim 14.

The invention-related method for the production of a porous, cementitious building component includes at least the step of mixing a binder with water and with an active porosification agent. The mixture is formed and the formed building component is dried. The active porosification agent is H-siloxane. A reduction of the gross weight of the cementitious building component of at least 10 wt.% is achieved solely by the active porosification of the H-siloxane. The reduction of the gross weight referes to a plate that contains no siloxane porosification agent, but otherwise has the identical composition and dimension.

H-siloxane is used for active porosification and can be used for various building materials (for example, calcium sulphate based cement, such as gypsum and anhydrite or hydraulic cement, for example Portland cement). The pores brought into the building material lead to a reduction of the gross density and thus the total weight. In this way lighter products can be manufactured; the thermal conductivity of the product is reduced. Furthermore, the manufactured products are mass hydrophobised.

An H-siloxane according to this invention is a polymethyl hydrogen siloxane which has low viscosity at room temperature, i.e. preferably being liquid.

With an application quantity of 0.1 to 5.0 wt.% based on the quantity of the binder, there is pore formation above a pH value of 8, more significantly at a pH value > 10 or 11. Gypsum, gypsum hemihydrate, anhydrite, and cement can be used as a binder. The quantity of the H-siloxane is particularly preferred between 0.5 and 1 wt. % based on the quantity of the binder.

According to a preferred embodiment of the invention the slurry, i.e. a mixture of at least the binder, the porosification agent and water, is set at a pH value higher than 11. At this pH value the H-siloxane develops its strongest porosification effect.

The pH value setting of the slurry can be achieved, for example, with calcium hydroxide. However, other additives that push the pH value into alkaline are also possible. A person skilled in the art will know the appropriate additive.

The active porosification of the slurry leads to a reduction of the gross weight of the finished building component of at least 10 wt.%, preferably of at least 20 wt.% and especially preferred of at least 30 wt.%. The reduction is determined on the the difference to the gross weight of an identical building component that was produced without the addition of a porosification agent.

According to another preferred embodiment of the invention, in addition to the active porosification of the building component a passive porosification can be effected by the addition of at least one air-entraining substance (air-entraining agent). The air-entraining substance can be, for example, a tenside known for this purpose by a person skilled in the art, for example anionic surfactants, such as sulphonates (olefin sulphonates, hydroxylated sulphonates with ethoxylated fatty alcohols or the like).

The air-entraining agent is preferably used in quantities between 0.02 and 0.1 wt.%, based on the quantity of the binder. The amount of the air-entraining agent is in any case significantly lower than the amount of the active porosification agent. The inventors have surprisingly-found that through the addition of low quantities of an air-entraining agent the reaction of the H-siloxane can be intensified.

It is particularly advantageous that the siloxane does not lose its hydrophobic effect through the foaming of the building material. Thus there is a synergistic effect. With only one additive a porous, cementitious building component can be produced with a mass hydrophobisation.

The active porosification agent or the H-siloxane can be added directly to the slurry.

The inventors have furthermore found that the dry parts of the building component, that is essentially the binder, can also be sprayed with H-siloxane. The dried, sprayed parts are storeable. For spraying, an air brush gun, for example, can be used or any method for fine, uniform distribution of a liquid onto a powdered material familiar to the person skilled in the art.

The storable variants of the method according to the invention are useful for light plasters and trowelling compounds, that must be mixed with water at the location of use. The porosification is only then effected.

The invention also includes a porous, cementitious building component, that was produced according to the above described method. The building component can be especially a trowelling compound, a plaster, a partition wall board or a building panel, preferably a gypsum plaster board or a gypsum fibreboard. The building component is mass hydrophobised.

According to a special embodiment of the invention at least 40 vol.-% of the pores, preferably at least 60 vol.-% of the pores have a relative pore size of 1000 to 10000 nm.

The invention is explained in more detail in the following based on examples. The figures show:
- **Fig. 1**: Comparison of the gross densities of variously composed samples based on β-hemihydrate
- **Fig. 2**: Comparison of the gross densities of variously composed samples based on α-hemihydrate
- **Fig. 3**: Light microscopic images of porous gypsum building materials, produced according to a method of the invention
- **Fig. 4**: Graph with frequency distribution of classified pore sizes of samples with various compositions

H-siloxane was added in different concentrations (0.5; 1.0 and 3.0 wt.% based on the quantity of calcined gypsum used) to the mixing water.

Mixtures of various basic compositions were prepared and mixed with different quantities of H-siloxane. Furthermore also various additional air-entraining substances were added. Details can be found in Table 1.

Samples 1 to 3 are zero samples, thus contain no porosification agent. Sample 1 contains a binder made up of 30 wt.% calcined FGD gypsum (FGD = flue gas desulphurization) and 70 wt.% calcined natural gypsum. In Sample 2 an α-hemihydrate was used as binder. Sample 3 contains 70 wt.% calcined FGD gypsum and 30 wt.% calcined natural gypsum as binder. All other samples differ only by the quantity and type of incorporated additives. All samples were prepared with water, formed into prisms and dried.

**Table 1: Composition and gross density of the selected samples**

| | **Composition** | **Gross density [kg/m³]** |
|---|---|---|
| Sample 1 | 30 wt.% FGD, 70 wt.% natural gypsum, calcined | 1072 |
| Sample 2 | 100 wt.% α-hemihydrate | 1741 |
| Sample 3 | 70 wt.% FGD, 30 wt.% natural gypsum, calcined | 1133 |
| Sample 4 | Sample 1 + **0.5 wt.% H-siloxane** + pH 8 | 894 |
| Sample 5 | Sample 1 + **1 wt.% H-siloxane** + pH 8 | 845 |
| Sample 6 | Sample 1 + **3 wt.% H-siloxane** + pH 12 | 624 |
| Sample 7 | Sample 1 + **1 wt.% H-siloxane** + **pH 12** | 714 |
| Sample 8 | Sample 1 + 1 wt.% H-siloxane + pH 12 **+OSB** | 632 |
| Sample 9 | Sample 1 + 1 wt.% H-siloxane + pH 12 **+Poro264** | 751 |
| Sample 10 | Sample 1 + 1 wt.% H-siloxane + pH 12 **+Poro265** | 588 |
| Sample 11 | Sample 1 + 1 wt.% H-siloxane + pH 12 **+Alenal** | 768 |
| Sample 12 | Sample 1 + 1 wt.% H-siloxane + pH 12 **+PPE** | 793 |
| Sample 13 | Sample 2 + 1 **wt.% H-siloxane** + **pH 9** | 1557 |
| Sample 14 | Sample 2 + 1 wt.% H-siloxane + **pH 12** | 1520 |
| Sample 15 | Sample 2 + 1 wt.% H-siloxane + **pH 9 + < 63µm** | 1575 |
| Sample 16 | Sample 3 + **1 wt.% H-siloxane** + **pH 12** | 997 |

| | | |
|---|---|---|
| • **OSB:** Pore generator with olefin sulphonate, was added in a quantity of 0.02 wt.% based on the quantity of the calcined gypsum used (sum of natural and FGD gypsum). • **Poro264:** Pore generator based on an olefin sulphonate was added in a quantity of 0.1 wt.% based on the quantity of the calcined gypsum used (sum of natural and FGD gypsum). • **Poro265:** Pore generator based on a wood rosin derivative with dried maleic resin was added in a quantity of 0.1 wt.% based on the quantity of the calcined gypsum used (sum of natural and FGD gypsum). • **Alenal:** Tartaric acid retarder was added in a quantity of 0.02 wt.% based on the quantity of the calcined gypsum used (sum of natural and FGD gypsum). • **PPE:** Retarder based on degraded polyamide with calcium and bone meal was added in a quantity of 0.01 wt.% based on the quantity of the calcined gypsum used (sum of natural and FGD gypsum). | | |

In some tests hydrated lime (Ca(OH)₂) was additionally added in order to set an alkaline pH value (> 11), since this contributes to a strong porosification effect of the H-siloxane. Furthermore tests with three different pore generators (Poro 264, Poro 265, OSB) were performed.

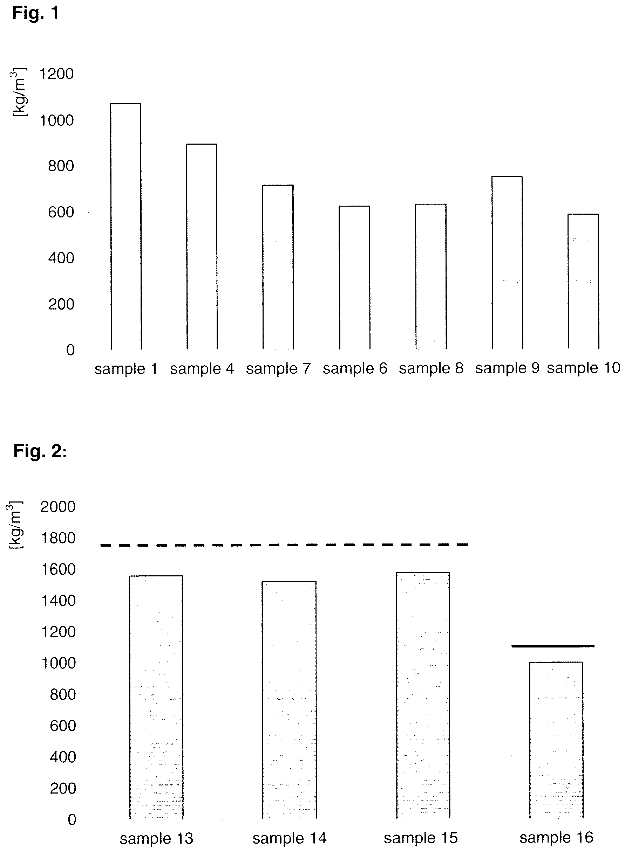

Results show that a reduction of the gross density of up to 350-400 kg/m³ can be achieved (see **Fig. 1**, Tab. 1: Comparison, e.g. Sample 1 and Sample 4). A delay of the gypsum using tartaric acid (Alenal) or PPE has no significant effect on the resulting gross density, Tab. 1: Comparison of Sample 7 and Sample 11 or Sample 12. The grain size of the stucco is not crucial, this is shown by tests with α-gypsum sieved to 63 µm (Tab. 1, Comparison Sample 13 and Sample 15).

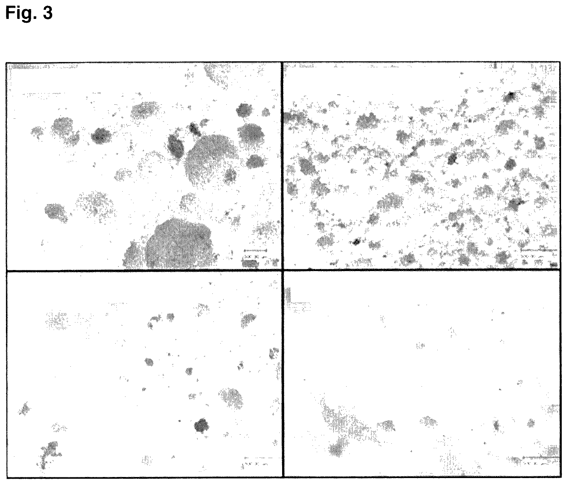

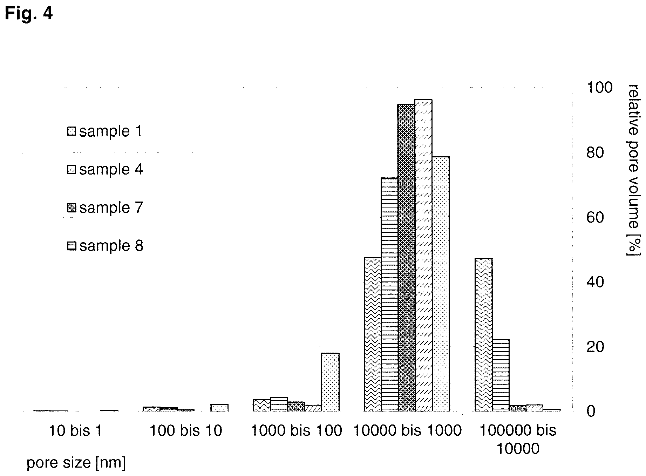

Porosification with H-siloxane usually results in spherical pores (see **Fig. 3**); more than 50% of the pores have a pore size of 1000 to 10000 nm (see Fig. 4).

The hydrophobic effect of the H-siloxane remains despite strong porosification.

The use of H-siloxane is especially useful when low weight/gross densities are required. Also a reduction of the thermal conductivity can be achieved with this type of porosification. Since H-siloxane can be added to the mixing water and also be sprayed on a dry calcium sulphate mixture, a broad field of applications is possible. The original hydrophobic effect is still present.

**Fig. 1** shows a comparison of the gross densities of samples of various compositions based on β-hemihydrate. The black line at a gross density of 1072 kg/m³ is the gross density of the non-porous Sample 1 in Tab. 1 and is used as a reference value.

Sample 5 and Sample 7 have identical compositions, but were processed at different pH values. This clearly illustrates that the porosification effect of the H-siloxane used is pH value dependent and increases with an increasing pH value.

If Sample 6 is compared with Sample 7 the influence of the quantity of the H-siloxane is seen. Sample 7 contains 1 wt.% and Sample 6 contains 3 wt.% H-siloxane. With an increasing quantity of H-siloxane, the gross density of the sample decreases.

It is apparent from the comparison of Sample 7 with Sample 8, that additional air-entraining agent (OSB) used in Sample 8 again leads to a reduction of the gross density with identical H-siloxane content. However, this effect is entirely different depending on the air-entraining agent used, than can be taken from the values of the gross density of the Samples 9 and 10. The composition of these samples are differentiated only in the additional air-entraining agent used (Poro 264 in Sample 9 and Poro 265 in Sample 10).

A comparison between Sample 7 and Sample 11 shows that the additional use of a retarder, here tartaric acid (Alenal), had no significant influence on the activity of the H-siloxane used. Also the retardation with PPE (Sample 12) had no significant influence on the resulting gross density.

**Fig. 2** shows a similar comparison as **Fig. 1****,** however here α-hemihydrate was used as a binderthe same tendencies as shown in **Fig. 1** can be confirmed. In addition the effect of various grain sizes of the binder (cement) were examined. It is illustrated that no significant effect on the porosification effect of the H-siloxane seems to exist here.

**Fig. 3** shows light microscopic images of gypsum building materials porosified with H-siloxane at various pH values. The samples were taken with identical magnification. The pores show different sizes and are essentially spherical shaped.

From **Fig. 4** the accumulation of pore sizes between 1000 and 10000 nm can be recognised in all samples which are based on the base composition of Sample 1 and contain differing quantities and types of additives. With the extra addition of air-entraining agent a further relative maximum with larger (10000 to 100000 nm) pore sizes is achieved.

## Claims

1. Method for producing a porous, cementitious building component, including at least the steps: mixing a binder with water and an active porosification agent to form a slurry, forming and drying the slurry, **characterised in that** the active porosification agent is a siloxane, **characterised in that** the siloxane is used in a quantity of 0.1 to 5.0 wt.% based on the quantity of the binder, **characterised in that** the pH value of the slurry is set larger than pH 8, and **characterised in that** the siloxane is a H-siloxane; wherein a reduction of the gross weight of the cementitious building component of at least 10 wt.% is achieved solely through the active porosification of the siloxane.

2. Method according to claim 1, **characterised in that** the H-siloxane is a polymethyl hydrogen siloxane.

3. Method according to one of the preceding claims, **characterised in that** the siloxane is used in a quantity from 0.5 to 1.0 wt.%, based on a quantity of the binder.

4. Method according to one of the preceding claims, **characterised in that** through the active porosification a reduction of the gross weight of the building component of at least 20 wt.% and preferably by at least 30 wt.% is achieved.

5. Method according to one of the preceding claims, **characterised in that** the binder contains at least one cement.

6. Method according to claim 5, **characterised in that** a calcium sulphate based or a hydraulic cement is used as cement.

7. Method according to one of the above claims, **characterised in that** in addition to the active porosification of the building component a passive porosification can be achieved by the addition of at least one air-entraining substance.

8. Method according to claim 7, **characterised in that** the air-entraining substance is a tenside.

9. Method according to one of the preceding claims, **characterised in that** a pH value of the slurry is set larger than pH 10 and especially larger than pH 11.

10. Method according to claim 9, **characterised in that** the pH value setting of the slurry is effected via calcium hydroxide or Portland cement.

11. Method according to one of the preceding claims, **characterised in that** the siloxane is added to the slurry or that the dry parts of the building component are sprayed with siloxane.

12. Use of H-siloxane for the porosification of cementitious building materials.

13. Use according to claim 12, **characterised in that** the H-siloxane is a liquid H-siloxane, i.e. a polymethyl hydrogen siloxane.

14. Porous, cementitious building component produced by a method according to one of the Claims 1 to 11, wherein the building component is a trowelling compound, a plaster, a partition wall board or a building panel, preferably a gypsum plaster board or a gypsum fibreboard.

15. Building component according to claim 14, **characterised in that** it is a partition wall board or a building panel, wherein 40 % of the pores, preferably at least 60% of the pores have a relative pore size of 1000 to 10000 nm.

## Patentansprüche

1. Verfahren zur Herstellung einer porösen, zementhaltigen Baukomponente, umfassend wenigstens die Schritte: Mischen eines Bindemittels mit Wasser und einem aktiven Porosierungsmittel unter Bildung einer Aufschlämmung, Formen und Trocknen der Aufschlämmung, **dadurch gekennzeichnet, dass** das aktive Porosierungsmittel ein Siloxan ist, **dadurch gekennzeichnet, dass** das Siloxan in einer Menge von 0,1 bis 5,0 Gew.-% verwendet wird, bezogen auf die Menge des Bindemittels, **dadurch gekennzeichnet, dass** der pH-Wert der Aufschlämmung größer als pH 8 eingestellt ist, und **dadurch gekennzeichnet, dass** das Siloxan ein H-Siloxan ist; wobei eine Reduktion des Bruttogewichts der zementhaltigen Baukomponente von wenigstens 10 Gew.-% ausschließlich durch die aktive Porosierung des Siloxans erreicht wird.

2. Verfahren gemäß Anspruch 1, **dadurch gekennzeichnet, dass** das H-Siloxan ein Polymethylhydrogensiloxan ist.

3. Verfahren gemäß einem der vorstehenden Ansprüche, **dadurch gekennzeichnet, dass** das Siloxan in einer Menge von 0,5 bis 1,0 Gew.-% verwendet wird, bezogen auf die Menge des Bindemittels.

4. Verfahren gemäß einem der vorstehenden Ansprüche, **dadurch gekennzeichnet, dass** durch die aktive Porosierung eine Reduktion des Bruttogewichts der Baukomponente von wenigstens 20 Gew.-% und vorzugsweise wenigstens 30 Gew.-% erreicht wird.

5. Verfahren gemäß einem der vorstehenden Ansprüche, **dadurch gekennzeichnet, dass** das Bindemittel wenigstens einen Zement enthält.

6. Verfahren gemäß Anspruch 5, **dadurch gekennzeichnet, dass** als Zement einer auf Calciumsulfatbasis oder ein hydraulischer Zement verwendet wird.

7. Verfahren gemäß einem der vorstehenden Ansprüche, **dadurch gekennzeichnet, dass** neben der aktiven Porosierung der Baukomponente durch die Zugabe wenigstens eines Luftporenbildners auch eine passive Porosierung erreicht werden kann.

8. Verfahren gemäß Anspruch 7, **dadurch gekennzeichnet, dass** der Luftporenbildner ein Tensid ist.

9. Verfahren gemäß einem der vorstehenden Ansprüche, **dadurch gekennzeichnet, dass** der pH-Wert der Aufschlämmung größer als pH 10 und insbesondere größer als pH 11 eingestellt ist.

10. Verfahren gemäß Anspruch 9, **dadurch gekennzeichnet, dass** die Einstellung des pH-Werts der Aufschlämmung durch Calciumhydroxid oder Portlandzement erfolgt.

11. Verfahren gemäß einem der vorstehenden Ansprüche, **dadurch gekennzeichnet, dass** das Siloxan zu der Aufschlämmung gegeben wird oder dass die trockenen Teile der Baukomponente mit Siloxan besprüht werden.

12. Verwendung von H-Siloxan für die Porosierung von zementhaltigen Baustoffen.

13. Verwendung gemäß Anspruch 12, **dadurch gekennzeichnet, dass** das H-Siloxan ein flüssiges H-Siloxan, d.h. ein Polymethylhydrogensiloxan, ist.

14. Poröse zementhaltige Baukomponente, hergestellt nach einem Verfahren gemäß einem der Ansprüche 1 bis 11, wobei die Baukomponente ein Spachtelmaterial, ein Putz, eine Trennwandplatte oder eine Bauplatte, vorzugsweise eine Gipsbauplatte oder eine Gipsfaserplatte, ist.

15. Baukomponente gemäß Anspruch 14, **dadurch gekennzeichnet, dass** es sich um eine Trennwandplatte oder eine Bauplatte handelt, wobei 40% der Poren, vorzugsweise wenigstens 60% der Poren, eine relative Porengröße von 1000 bis 10000 nm aufweisen.

## Revendications

1. Procédé de production d'un composant de construction cimentaire poreux, incluant au moins les étapes de :
mélange d'un liant avec de l'eau et un agent de porosification actif pour former une boue, formation et séchage de la boue, **caractérisé en ce que** l'agent de porosification actif est un siloxane, **caractérisé en ce que** le siloxane est utilisé en une quantité de 0,1 à 5,0 % en poids par rapport à la quantité du liant, **caractérisé en ce que** la valeur pH de la boue est fixée à plus de pH 8, et **caractérisé en ce que** le siloxane est un H-siloxane ;
dans lequel une réduction du poids brut du composant de construction cimentaire d'au moins 10 % en poids est obtenue uniquement par la porosification active du siloxane.

2. Procédé selon la revendication 1, **caractérisé en ce que** le H-siloxane est un polyméthyl hydrogénosiloxane.

3. Procédé selon l'une des revendications précédentes, **caractérisé en ce que** le siloxane est utilisé en une quantité de 0,5 à 1,0 % en poids, par rapport à une quantité du liant.

4. Procédé selon l'une des revendications précédentes, **caractérisé par le fait que** la porosification active permet d'obtenir une réduction du poids brut du composant de construction d'au moins 20 % en poids et préférentiellement d'au moins 30 % en poids.

5. Procédé selon l'une des revendications précédentes, **caractérisé en ce que** le liant contient au moins un ciment.

6. Procédé selon la revendication 5, **caractérisé en ce qu'**un ciment à base de sulfate de calcium ou un ciment hydraulique est utilisé comme ciment.

7. Procédé selon l'une des revendications précédentes, **caractérisé en ce qu'**en plus de la porosification active du composant de construction, une porosification passive peut être réalisée par l'ajout d'au moins une substance à entraînement d'air.

8. Procédé selon la revendication 7, **caractérisé en ce que** la substance à entraînement d'air est un tensioactif.

9. Procédé selon l'une des revendications précédentes, **caractérisé en ce qu'**une valeur de pH de la boue est fixée à plus de pH 10 et notamment plus de pH 11.

10. Procédé selon la revendication 9, **caractérisé en ce que** la fixation de la valeur de pH de la boue est effectuée par l'intermédiaire d'hydroxyde de calcium ou de ciment Portland.

11. Procédé selon l'une des revendications précédentes, **caractérisé en ce que** le siloxane est ajouté à la boue ou **en ce que** les parties sèches du composant de construction sont pulvérisées avec du siloxane.

12. Utilisation du H-siloxane pour la porosification de matériaux de construction cimentaires.

13. Utilisation selon la revendication 12, **caractérisée en ce que** le H-siloxane est un H-siloxane liquide, c'est-à-dire un polyméthyl hydrogénosiloxane.

14. Composant de construction cimentaire poreux produit par un procédé selon l'une des revendications 1 à 11, dans lequel le composant de construction est un composé à appliquer à la spatule, un plâtre, un panneau de cloison ou un panneau de construction, préférentiellement un panneau de plâtre ou un panneau de fibres de plâtre.

15. Composant de construction selon la revendication 14, **caractérisé en ce qu'**il s'agit d'un panneau de cloison ou d'un panneau de construction, dans lequel 40 % des pores, préférentiellement au moins 60 % des pores ont une taille de pore relative de 1000 à 10000 nm.
